# EUROPEAN PATENT APPLICATION

(11) **EP 3 828 057 A1**
(43) Date of publication of application: **02.06.2021**
(21) Application number: 20209034.6
(22) Date of filing: 20.11.2020
(51) Int. Cl.: B62D 5/04, B62D 7/14, B60G 21/05, B62D 7/15

(54) **STEERING FUNCTION-EQUIPPED HUB UNIT**

(30) Priority: 27.11.2019 JP 2019214179
(71) Applicant: NTN Corporation, Osaka-shi, Osaka 550-0003 (JP)
(72) Inventor: SAKAGAMI, Kyohei, Wako-shi, Shizuoka 351-0193 (JP); YAGASAKI, Toru, Wako-shi, Saitama 351-0193 (JP); OHATA, Yusuke, Iwata-shi, Shizuoka 438-8510 (JP); OOBA, Hirokazu, Iwata-shi, Shizuoka 438-8510 (JP)
(74) Representative: Maikowski & Ninnemann Patentanwälte Partnerschaft mbB

(57) **Abstract**

Provided is a steering function-equipped hub unit for steering a rear wheel configured to be supported by a suspension device including a torsion beam and a pair of trailing arms. The hub unit includes: a turning shaft-equipped hub bearing including a turning shaft extending in a vertical direction and configured to rotatably support the rear wheel; a unit support member supporting the turning shaft-equipped hub bearing such that the turning shaft-equipped hub bearing is rotatable about a turning axis; and a steering actuator separate from the unit support member and configured to rotationally drive the turning shaft-equipped hub bearing. The steering actuator is attached to the suspension device at a position higher than a lowermost surface of the torsion beam and between a rotation support part of the suspension device and the turning shaft-equipped hub bearing.

## Description

### CROSS REFERENCE TO THE RELATED APPLICATION

This application is based on and claims Convention priority to Japanese patent application No. 2019-214179, filed November 27, 2019, the entire disclosure of which is herein incorporated by reference as a part of this application.

### BACKGROUND OF THE INVENTION

### (Field of the Invention)

The present invention relates to a steering function-equipped hub unit having a function of steering a rear wheel carried by a torsion beam suspension device and to a technology of controlling left and right rear wheels to appropriate steering angles according to traveling conditions so as to improve fuel economy, traveling stability and safety.

### (Description of Related Art)

As an example of a rear-wheel steering mechanism, Patent Document 1 employs a steering actuator attached to an unsprung site (or a torsion beam suspension device). The steering actuator is disposed along a trailing arm extending in a front-rear direction of a vehicle so to avoid interference with other components such as a fuel tank or a silencer, and the steering actuator is disposed near an attachment part to a vehicle body so as to suppress change of toe angles in association with up-and-down motion of tires.

### [Related Document]

### [Patent Document]

[Patent Document 1] JP Patent No. 4966273
[Patent Document 2] JP Laid-open Patent Publication No. 2020-050231

### SUMMARY OF THE INVENTION

The structure of Patent Document 1 requires a large power to steer the tires while drawing them because a king pin shaft (a turning shaft) is located away from a center of a ground contact surface of each tire. Also, the structure has large tire houses because the tires have large turning paths.

A steering function-equipped hub unit (see Patent Document 2 above) that has been proposed by the present applicant can be mounted even on a rigid axle such as a torsion beam suspension device and is capable of independently controlling each steering angle. However, a coil spring and a shock absorber are disposed on the back of a hub bearing of the steering function-equipped hub unit. Thus, when arranging a steering actuator of the steering function-equipped hub unit, it is necessary to avoid interference with the coil spring and the shock absorber. Where the steering function-equipped hub unit is increased in the size and therefore the weight for this reason, that may affect ride quality of the vehicle. In addition, in order to increase the steering angle, the steering actuator would have an increased size, making it difficult to mount the steering function-equipped hub unit in the vehicle.

A torsion beam suspension device which is applied to rear wheels of a vehicle is rotationally supported by a vehicle body at a rotation support part and bounds/rebounds in conjunction with the motions of the vehicle. The torsion beam suspension device is an unsprung component, and weight increase of an unsprung component affects ride quality of the vehicle. Also, where a heavy object is attached away from the rotation support part, a moment of inertia increases, which may lead to deterioration of the ride quality.

The vehicle has components such as a shock absorber for a suspension device or a muffler near the rear wheels and thus has a limited space to dispose the steering actuator in that area. Accordingly, the steering actuator would interfere with other components so that it is difficult to easily mount the steering function-equipped hub unit in the vehicle.

An object of the present invention is to provide a steering function-equipped hub unit capable of adjusting a steering angle to a desired angle, preventing deterioration of ride comfort of a vehicle, and being easily mounted in the vehicle without involving a significant structural change to the vehicle.

A steering function-equipped hub unit of the present invention is configured to steer a rear wheel of a vehicle, which is configured to be supported by a suspension device including a torsion beam and a pair of trailing arms. The steering function-equipped hub unit includes:
a turning shaft-equipped hub bearing including a turning shaft extending in a vertical direction and configured to rotatably support the rear wheel;
a unit support member supporting the turning shaft-equipped hub bearing such that the turning shaft-equipped hub bearing is rotatable about a turning axis of the turning shaft; and
a steering actuator separate from the unit support member and configured to rotationally drive the turning shaft-equipped hub bearing about the turning axis, in which
the steering actuator is attached to the suspension device at a position higher than a lowermost surface of the torsion beam of the suspension device and between a rotation support part of the suspension device and the turning shaft-equipped hub bearing.

The term "separate" means that the steering actuator and the unit support member are constituted by distinct elements that can be detached from each other. The rotation support part is a constituent of the suspension device and is supported so as to be rotatable with respect to the vehicle body about an axis in a vehicle widthwise direction.

According to this configuration, the turning shaft-equipped hub bearing which supports the rear wheel can be freely rotated about the turning axis by driving the steering actuator. The steering actuator is separate from the unit support member so that the steering actuator having an increased size can be disposed without causing interference with existing components. Thus, a desired steering angle can be achieved. The steering actuator that is separate from the unit support member is attached to the suspension device between the rotation support part of the suspension device and the turning shaft-equipped hub bearing so that it is possible to suppress increase in the moment of inertia of the suspension device and to prevent deterioration of the ride quality during bounding or the like in comparison with a conventional configuration in which the unit support member and the steering actuator are integrally provided. As the heavy steering actuator is mounted closer to the rotation support part, the moment of inertia decreases, so that it is possible to prevent deterioration of the ride quality. Since the steering actuator is a separate component from the unit support member, the mechanical elements have a greater choice of arrangements, making it possible to easily dispose the steering function-equipped hub unit in the vehicle without losing a space for the existing components such as a shock absorber. Therefore, the steering function-equipped hub unit can be easily mounted in the vehicle without involving a significant structural change to the vehicle.

The steering actuator may include a linear motion mechanism main body and a linear motion output part capable of advancing and retreating with respect to the linear motion mechanism main body and configured to provide a steering force to an outer ring of the turning shaft-equipped hub bearing, and the linear motion mechanism main body may be attached to the suspension device such that the linear motion output part advances and retreats in a left-right direction of the vehicle body. As the linear motion mechanism main body is attached to the suspension device such that the linear motion output part advances and retreats in the left-right direction of the vehicle body, an empty space in the vehicle body can be effectively used.

Each of the trailing arms may further include a communication hole communicating a vehicle inner side with a vehicle outer side, and a part of the linear motion output part may be located within the communication hole. Where the linear motion output part is disposed so as to extend above a trailing arm, the layout would be limited because the linear motion output part interferes with other components such as a spring. Where the linear motion output part is disposed so as to extend below a trailing arm, it is necessary to increase the lowest ground clearance of the vehicle in order to avoid interference between the linear motion output part and the ground. In contrast, where the linear motion output part is disposed so as to pass through the communication hole of a trailing arm, it is possible to avoid interference with other components so that it is not necessary to increase the lowest ground clearance.

The steering actuator may be disposed at a location where the steering actuator overlaps with the trailing arms in a side view. In this case, the linear motion output part can have a reduced length in comparison with the case where the steering actuator is disposed at a location where the steering actuator does not overlap with the trailing arms in a side view.

The suspension device may further include a spring sheet, and the steering actuator may be fixed to the spring sheet. Where the steering actuator is fixed to the torsion beam, the steering actuator would act as a rigid member against torsion of the torsion beam so that the steering actuator would suppress the torsion and thereby may worsen the ride quality of the vehicle. According to this configuration, the steering actuator is fixed to the spring sheet, so that the influence on the torsion of the torsion beam is suppressed, and the ride quality can be ensured.

The suspension device may have left and right side parts, each of the side parts being attached with the unit support member, and the single steering actuator may be configured to steer left and right rear wheels. In this case, it is possible to reduce the weight of unsprung components and to suppress the moment of inertia in comparison with the configuration where two steering actuators are used to steer the left and right rear wheels.

The present invention encompasses any combination of at least two features disclosed in the claims and/or the specification and/or the drawings. In particular, any combination of two or more of the appended claims should be equally construed as included within the scope of the present invention.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views. In the figures,
Fig. 1 is a perspective view of an outer appearance of an entire steering function-equipped hub unit according to a first embodiment of the present invention, in a state where the hub unit is mounted in a vehicle;
Fig. 2 is a side view of the steering function-equipped hub unit;
Fig. 3 is a sectional view along line III-III of Fig. 2;
Fig. 4 is a perspective view of an outer appearance of an entire steering function-equipped hub unit according to another embodiment of the present invention, in a state where the hub unit is mounted in a vehicle;
Fig. 5 is a perspective view of the steering function-equipped hub unit according to yet another embodiment of the present invention;
Fig. 6 is a plan view of the steering function-equipped hub unit;
Fig. 7 is a schematic plan view of a vehicle including any of the steering function-equipped hub units;
Fig. 8 is a perspective view of an outer appearance of an entire steering function-equipped hub unit according to still another embodiment of the present invention, in a state where the hub unit is mounted in a vehicle; and
Fig. 9 is a schematic plan view of a vehicle including the steering function-equipped hub unit.

### DESCRIPTION OF THE EMBODIMENTS

### First Embodiment

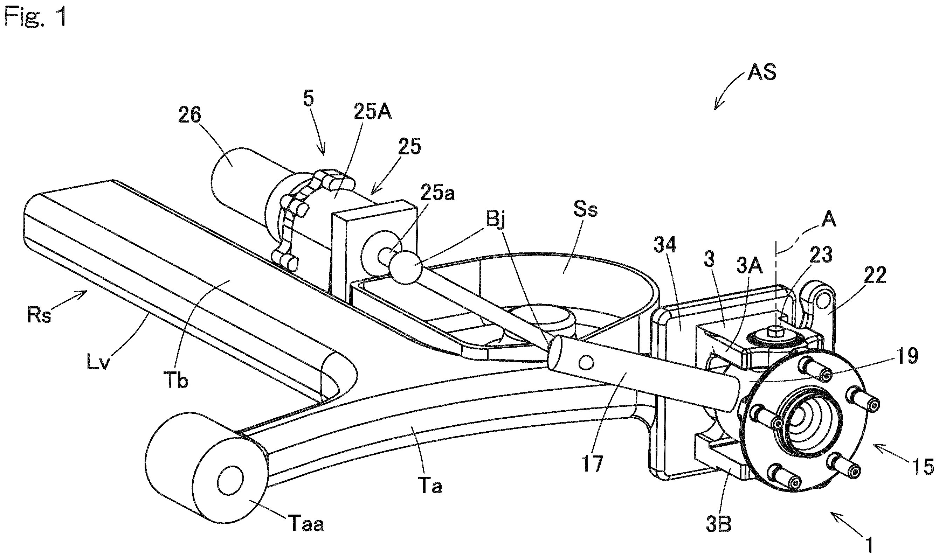

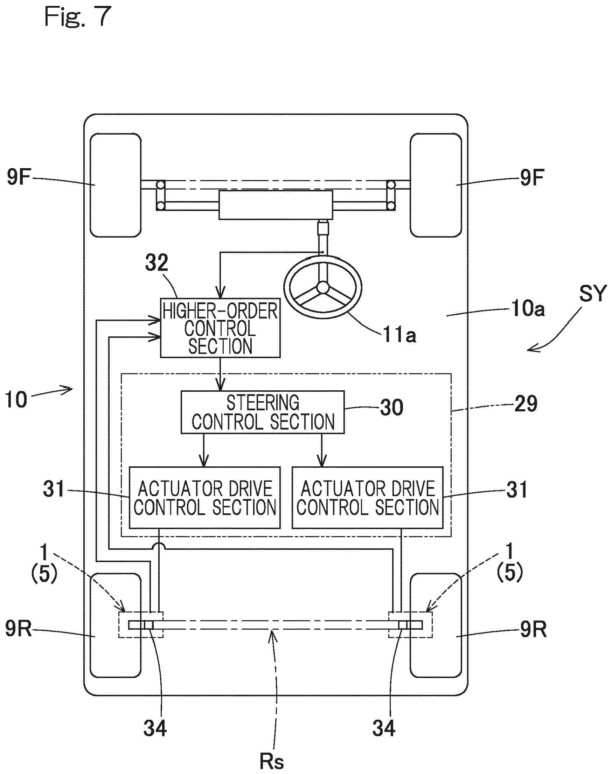

A steering function-equipped hub unit according to an embodiment of the present invention will be described with reference to Fig. 1 to Fig. 3 and Fig. 7. As shown in Fig. 7, the steering function-equipped hub unit 1 according to the embodiment has a function of independently steering each of left and right rear wheel 9R, 9R that are supported by a torsion beam suspension device Rs and is applied to each of the rear wheel 9R, 9R of a vehicle 10 having a front-wheel steer function.

### Schematic Structure of Steering Function-Equipped Hub Unit

As shown in Fig. 1, the steering function-equipped hub unit 1 includes a turning shaft-equipped hub bearing 15, a unit support member 3, and a steering actuator 5. As shown in Fig. 7, the steering function-equipped hub units 1 can independently steer the left and right rear wheels 9R, 9R by a minute angle (about ± 5 degrees) in conjunction with steering of left and right front wheels 9F, 9F through, e.g., an operation of a steering wheel. It should be noted that the steering function-equipped hub units 1 may cause the left and right wheels to independently assume, not only the minute angle, a relatively large angle (for example, 10° to 20°) according to a vehicle control request.

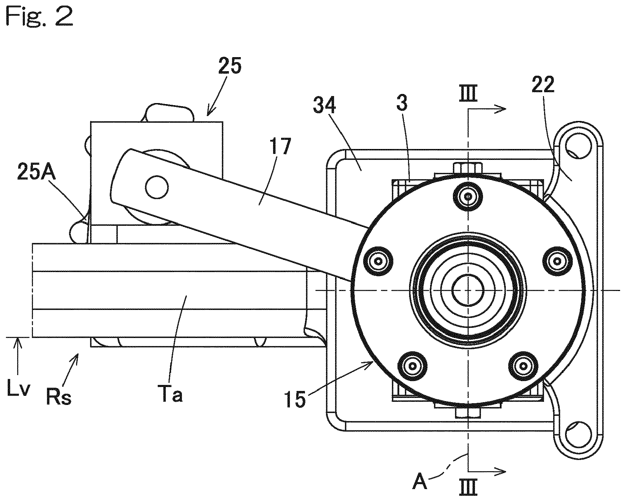

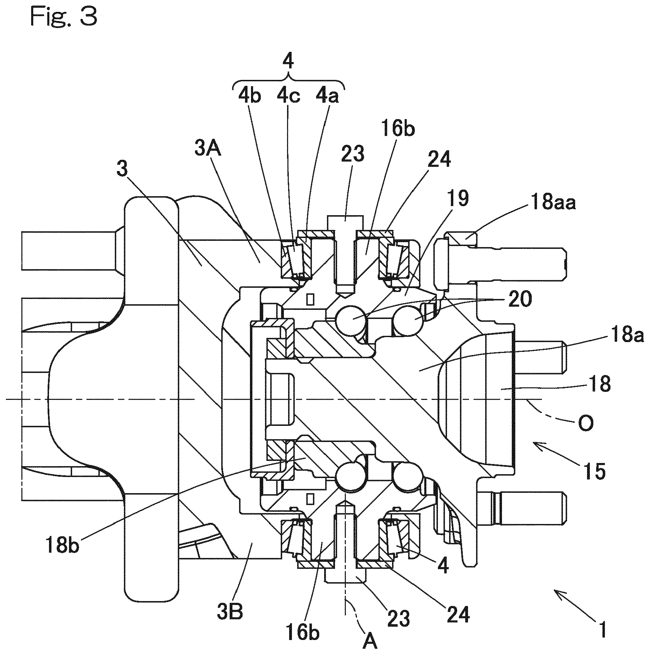

As shown in Fig. 1 and Fig. 2, the turning shaft-equipped hub bearing 15 is disposed on an outboard side of the unit support member 3. The term "outboard side" refers to an outer side of the vehicle 10 (Fig. 7) in a vehicle widthwise direction in a state where the steering function-equipped hub unit 1 is mounted in the vehicle 10 (Fig. 7), and the term "inboard side" refers to a side closer to a center of the vehicle 10 (Fig. 7) in the vehicle widthwise direction. As shown in Fig. 1 and Fig. 3, the turning shaft-equipped hub bearing 15 is supported by the unit support member 3 through rotation-permitting support components 4, 4 at two upper and lower positions such that turning shafts 16b, 16b extending in a vertical direction are rotatable about a turning axis A. The turning axis A is different from a rotation axis O of the rear wheel 9R (Fig. 7).

### Turning Shaft-Equipped Hub Bearing 15

The turning shaft-equipped hub bearing 15 connects a member on a vehicle body side to the rear wheel 9R (Fig. 7) and allows the rear wheel 9R (Fig. 7) to smoothly rotate. The turning shaft-equipped hub bearing 15 includes an inner ring 18, an outer ring 19, rolling elements 20 such as balls interposed between the inner and outer rings 18, 19, and the turning shafts 16b, 16b extending in the vertical direction. The turning shaft-equipped hub bearing 15 further includes an arm part 17 as described later.

In the illustrated example, the turning shaft-equipped hub bearing 15 is an angular ball bearing including the outer ring 19 as a stationary ring, the inner ring 18 as a rotary ring, and the rolling elements 20 arranged in double rows. The inner ring 18 includes a hub axle part 18a that includes a hub flange 18aa and constitutes a raceway surface on the outboard side and an inner ring part 18b that constitutes a raceway surface on an inboard side. The rear wheel 9R (Fig. 7) has a wheel body fixed to the hub flange 18aa by a bolt in an overlapping manner with a brake rotor (not illustrated). The inner ring 18 rotates about the rotation axis O.

The turning shafts 16b, 16b are trunnion shaft-type parts provided so as to upwardly and downwardly protrude from an outer periphery of the outer ring 19. Each of the turning shafts 16b is coaxial with the turning axis A. Although the respective turning shafts 16b are integrally formed on the outer ring 19 in the illustrated example, it is also possible, for instance, to provide fittable annular parts on an outer peripheral surface of the outer ring 19 and then provide the turning shafts so as to protrude upwardly and downwardly from outer peripheries of the annular parts. The expression "integrally formed" means that the outer ring 19 and the turning shafts 16b are shaped as a part of a single object made of a single material through, e.g., forging or mechanical processing, instead of being constituted by multiple elements jointed together.

A brake includes the brake rotor and a non-illustrated brake caliper. The brake caliper is attached to brake caliper attachment parts 22 at two upper and lower positions, each of the brake caliper attachment parts being formed integrally with the outer ring 19 so as to protrude in an arm-like manner.

### Unit Support Member and the Like

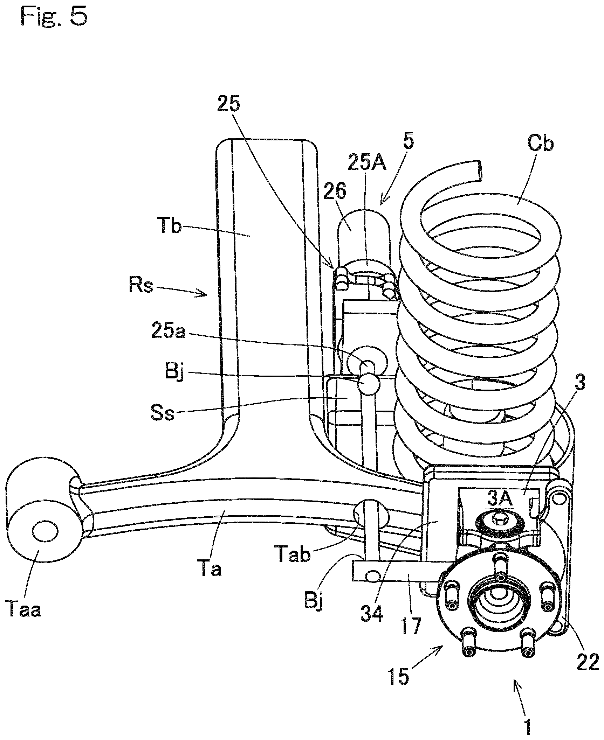

As shown in Fig. 1 and Fig. 2, the torsion beam suspension device Rs has left and right opposite side parts each attached with a unit support member 3 for the steering function-equipped hub unit 1. The torsion beam suspension device Rs and the steering function-equipped hub units 1 attached to the suspension device Rs through the unit support members 3 constitute a suspension device-hub unit assembly AS. The suspension device Rs include a pair of left and right trailing arms Ta, Ta each extending in a front-rear direction of a vehicle body 10a (Fig. 7), a torsion beam Tb connecting the trailing arms Ta, Ta, coil springs Cb (see Fig. 5) and shock absorbers.

Each of the unit support members 3 is fixed to an attachment part 34 provided to one end portion (a rear end portion) of a corresponding trailing arm Ta. Each of the unit support members 3 is removably fixed to an outboard side surface of corresponding one of the left and right attachment parts 34 through a bolt or the like. Each trailing arm Ta has the other end portion provided with a rotation support part Taa. The left and right rotation support parts Taa, Taa are supported so as to be rotatable relative to the vehicle body 10a (Fig. 7) about an axis in the vehicle widthwise direction in a mutually coaxial manner. Thus, the left and right trailing arms Ta, Ta are attached to the vehicle body 10a (Fig. 7) through the rotation support parts Taa, Taa so as to be swingable in the vertical direction. Spring sheets Ss, Ss to which lower end portions of the coil springs are attached are provided to a rear end portion of the torsion beam Tb at positions near opposite longitudinal ends of the torsion beam.

As shown in Fig. 3, each of the rotation-permitting support components 4 includes a rolling bearing. In this example, a tapered roller bearing is used as the rolling bearing. The rolling bearing includes: an inner ring 4a fitted to an outer periphery of the turning shaft 16b; an outer ring 4b fitted to the unit support member 3; and a plurality of rolling elements 4c interposed between the inner ring 4a and the outer ring 4b. The upper and lower rolling bearings are located inside the wheel body. The unit support member 3 has upper and lower parts 3A, 3B each formed with a fitting hole, and the outer ring 4b is fittedly fixed to the respective fitting holes. The respective fitting holes are coaxial with the turning axis A.

Each of the turning shafts 16b is formed with a female thread part, and a bolt 23 is screwed into the female thread part. The bolt 23 screwed into the female thread part applies a pressing force to an end face of the inner ring 4a, with a pressing member 24 of a disk shape interposed between the bolt and the end face of the inner ring 4a, so as to apply an appropriate preload to each rolling bearing. Thus, strength and durability of the respective rotation-permitting support components 4 can be ensured. The initial preload is set such that the preload is maintained even when the weight of the vehicle acts on the steering function-equipped hub unit 1. Thus, the steering function-equipped hub unit 1 can securely have the rigidity required for a steering device. It should be noted that the rotation-permitting support components 4 are not limited to tapered roller bearings. The rotation-permitting support components 4 may be, for example, angular ball bearings depending on use conditions such as a maximal load ratio. Even in that case, a preload can be applied to the respective bearings in the same manner as above.

As shown in Fig. 1, the arm part 17 serves as a point of application at which an auxiliary steering force is applied to the outer ring 19 of the turning shaft-equipped hub bearing 15. The arm part 17 is integrally formed on a part of the outer periphery of the outer ring 19 so as to protrude radially outward. The arm part 17 is rotatably connected to an output rod 25a, which is a linear motion output part of the steering actuator 5, through a ball joint Bj. As the output rod 25a of the steering actuator 5 advances and retreats, the turning shaft-equipped hub bearing 15 is caused to rotate, i.e., to be turned about the turning axis A. Use of the ball joint Bj eliminates the necessity of aligning attachment heights of the steering actuator 5 and the arm part 17 of the turning shaft-equipped hub bearing 15, so that a distance between the steering actuator 5 and the turning shaft-equipped hub bearing 15 can be arbitrarily set.

This makes it possible to arbitrarily change the attachment height of the steering actuator 5 and the distance between the steering actuator 5 and the turning shaft-equipped hub bearing 15, providing more flexibility of mounting the steering actuator 5 in the vehicle 10. Further, when mounting the steering actuator in the vehicle 10, a toe angle can be adjusted by changing the length of the ball joint Bj and the position of the steering actuator 5. Typically, a non-illustrated for protection against water and dust is attached near the ball joint Bj.

### Steering Actuator 5

As shown in Fig. 1 and Fig. 2, the steering actuator 5 is separate from the unit support member 3 and is configured to rotationally drive the turning shaft-equipped hub bearing 15 about the turning axis A. The term "separate" means that the steering actuator 5 and the unit support member 3 are constituted by distinct elements that can be detached from each other.

The steering actuator 5 includes a motor 26 that is a rotational drive source, a non-illustrated a speed reducer configured to reduce a speed of rotation of the motor 26, and a linear motion mechanism 25. The linear motion mechanism 25 is a mechanism configured to convert a forward/reverse rotation output from the speed reducer into a reciprocating linear motion of the output rod 25a. The motor 26 is, for example, a permanent magnet synchronous motor, or it may be a direct current motor or an induction motor. The speed reducer may be, for example, a winding-type transmission mechanism such as a belt transmission mechanism or a gear train.

The linear motion mechanism 25 may be a feed screw mechanism of a slide screw type, such as a trapezoid screw or a triangle screw. In this example, a feed screw mechanism with a trapezoid sliding screw is used. The linear motion mechanism 25 includes the feed screw mechanism and a linear motion mechanism main body 25A. The linear motion mechanism main body 25A is a cover for covering constituting parts such as the feed screw mechanism. The feed screw mechanism includes a non-illustrated nut part and the output rod 25a that is a screw shaft. The output rod 25a is non-rotatable with respect to the linear motion mechanism main body 25A. It is also possible to use a mechanism for directly transmitting a driving force from the motor 26 to the linear motion mechanism 25 without involving a speed reducer.

The steering actuator 5 is attached to the suspension device Rs at a position higher than a lowermost surface Lv of the torsion beam Tb of the suspension device Rs and between the rotation support part Taa of the suspension device Rs and the turning shaft-equipped hub bearing 15. Specifically, the linear motion mechanism main body 25A is fixed to a side surface of the torsion beam Tb of the suspension device Rs at a position near a longitudinal end of the torsion beam. The linear motion mechanism main body 25A extends in a left-right direction of the vehicle body and is fixed to the torsion beam Tb such that the output rod 25a can advance and retreat in the left-right direction. The linear motion mechanism main body 25A is disposed such that the output rod 25a faces the outboard side.

The position of the arm part 17 of the turning shaft-equipped hub bearing 15 changes depending on the direction in which the steering actuator 5 is disposed. In order to efficiently steer the rear wheel with small energy, it is desirable to straightly move the arm part 17 back and forth in a direction perpendicular to the turning shaft 16b (Fig. 3) of the turning shaft-equipped hub bearing 15. The arm part 17 and the steering actuator 5 are disposed such that the arm part 17 can be operated in that manner. The torsion beam Tb has, for example, a concave cross section when viewed in a plane perpendicular to a longitudinal direction of the torsion beam Tb, and the lowermost surface Lv of the torsion beam Tb is a leading-edge portion of an opening of the concave part. A torsion bar (not illustrated) may be incorporated in the torsion beam Tb.

### Effects and Advantages

The turning shaft-equipped hub bearing 15 that support the rear wheel 9R can be arbitrarily rotated about the turning axis A by driving the steering actuator 5. Thus, an optimal steering angle can be achieved. For example, the steering angle of the rear wheel 9R can be arbitrarily controlled according to travel conditions of the vehicle 10. For example, the steering angle of the rear wheel 9R may be matched with a phase of a front wheel 9F so as to suppress a yaw generated in the vehicle 10 during steering and to enhance the stability of the vehicle 10. Further, the steering angles on the left and right sides may be independently adjusted while traveling straight so as to ensure the stability of traveling of the vehicle 10.

Since the steering actuator 5 is a separate component from the unit support member 3, the steering actuator 5 having an increased size can be disposed without causing interference with existing components. Thus, a stroke amount of the output rod 25a can be increased so as to achieve a desired steering angle.

The steering actuator 5 which is separate from the unit support member 3 is attached to the suspension device Rs between the rotation support part Taa of the suspension device Rs and the turning shaft-equipped hub bearing 15, so that it is possible to suppress increase in the moment of inertia of the suspension device Rs and to prevent deterioration of the ride quality of the vehicle during bounding or the like in comparison with a conventional configuration in which the unit support member 3 and the steering actuator 5 are integrally provided. As the heavy steering actuator 5 is mounted closer to the rotation support part Taa, the moment of inertia decreases, so that it is possible to prevent deterioration of the ride quality.

Since the steering actuator 5 is a separate component from the unit support member 3, the mechanical elements have a greater choice of arrangements, making it possible to easily mount the steering function-equipped hub unit 1 in the vehicle 10 without losing a space for the existing components such as a shock absorber. In addition, since the linear motion mechanism main body 25A is attached to the suspension device Rs such that the output rod 25a advances and retreats in the left-right direction of the vehicle body 10a, an empty space in the vehicle body 10a can be effectively used. Therefore, the steering function-equipped hub unit 1 can be easily mounted in vehicle 10 without involving a significant structural change to the vehicle 10.

The turning shaft-equipped hub bearing 15 is supported by the unit support member 3 through the rotation-permitting support components 4, 4 at two upper and lower positions so as to be rotatable about the turning axis A, and the upper and lower rotation-permitting support components 4, 4 are located within a wheel body of a rear wheel 9R. Thus, the steering function-equipped hub unit 1, which can have a highly rigid and compact configuration, can be easily mounted in a vehicle. Therefore, as the steering function-equipped hub unit 1 can be easily mounted in an existing vehicle 10, the steering function-equipped hub unit 1 can have high versatility.

### Other Embodiments

In the following description, features corresponding to those described for the above embodiment are denoted with like reference numerals, and overlapping description will not be repeated. Where description is made only to a part of a feature, other part of the feature is the same as that of the embodiment described above, unless specifically indicated otherwise. Like features provide like effects. Combination of parts is not limited to those specifically described in the respective embodiments, and parts of the embodiments can also be combined as long as such a combination does not particularly cause a problem.

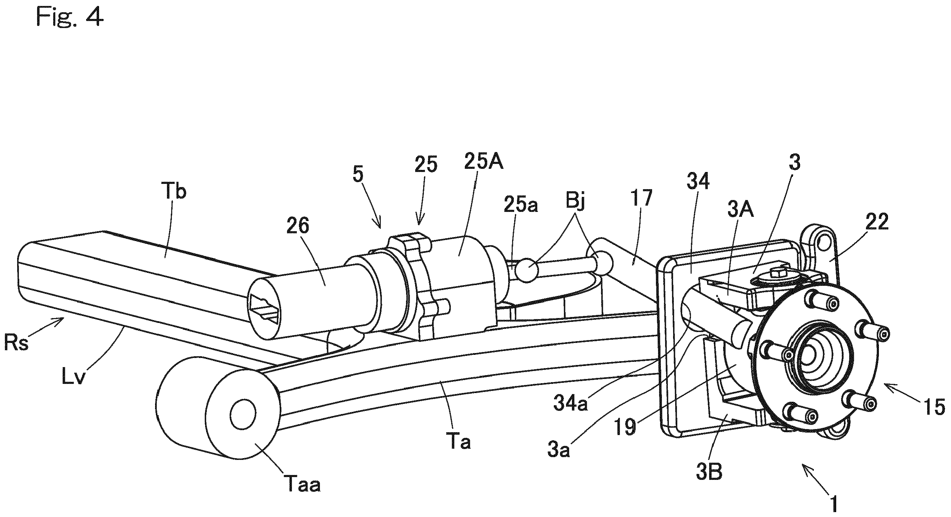

As shown in Fig. 4, the linear motion mechanism main body 25A of the steering actuator 5 extends in the front-rear direction of the vehicle and is fixed to one of the trailing arms Ta such that the output rod 25a advances and retracts in the front-rear direction. The steering actuator 5 is also attached to the suspension device Rs at a position higher than the lowermost surface Lv of the torsion beam Tb and between the rotation support part Taa and the turning shaft-equipped hub bearing 15. The arm part 17 of this example protrudes from the outer periphery of the outer ring 19 toward the inboard side. The unit support member 3 is formed with a cut part 3a for allowing the arm part 17 to protrude toward the inboard side, and the attachment part 34 is formed with a hole 34a for preventing interference with the arm part 17. This example also provides the same effects and advantages as those of the embodiment described above.

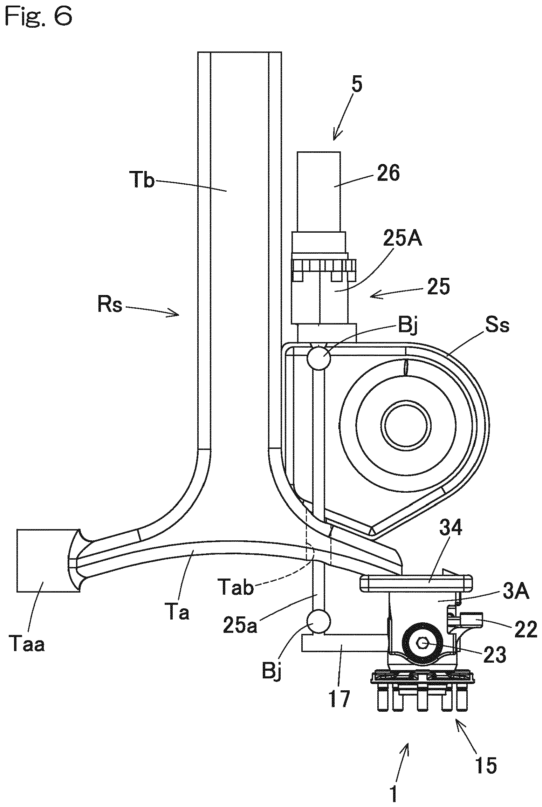

As shown in Fig. 5 and Fig. 6, as for the steering actuator 5, the linear motion mechanism main body 25A may be fixed to the spring sheet Ss such that the linear motion mechanism main body 25A extends in the left-right direction of the vehicle body and the output rod 25a advances and retracts in the left-right direction. The linear motion mechanism main body 25A is disposed such that the output rod 25a extends toward the outboard side. The trailing arm Ta has a communication hole Tab that communicates a vehicle inner side with a vehicle outer side, and a part of the output rod 25a is located within the communication hole Tab. That is, the output rod 25a is disposed so as to pass through the communication hole Tab of the trailing arm Ta. The steering actuator 5 is disposed at a location where the steering actuator overlaps with the trailing arm Ta in a side view.

In this regard, where the linear motion output part is disposed so as to extend above the trailing arm, the layout would be limited because the linear motion output part interferes with other components such as a spring. Similarly, where the linear motion output part is disposed so as to extend below the trailing arm, it is necessary to increase the lowest ground clearance of the vehicle in order to avoid interference between the linear motion output part and the ground. In contrast, as shown in Fig. 5 and Fig. 6, the output rod 25a that is a linear motion output part is disposed so as to pass through the communication hole Tab of the trailing arm Ta, it is possible to avoid interference with other components so that it is not necessary to increase the lowest ground clearance.

Since the steering actuator 5 is disposed at a location where the steering actuator overlaps with the trailing arm Ta in a side view, the output rod 25a can have a reduced length in comparison with the case where the steering actuator is disposed at a location where the steering actuator does not overlap with the trailing arm in a side view.

Where the steering actuator is fixed to the torsion beam, the steering actuator acts as a rigid member against torsion of the torsion beam so that the steering actuator would suppress the torsion and thereby may worsen the ride quality. According to this configuration, the steering actuator 5 is fixed to the spring sheet Ss, so that the influence on the torsion of the torsion beam Tb is suppressed, and ride quality can be ensured.

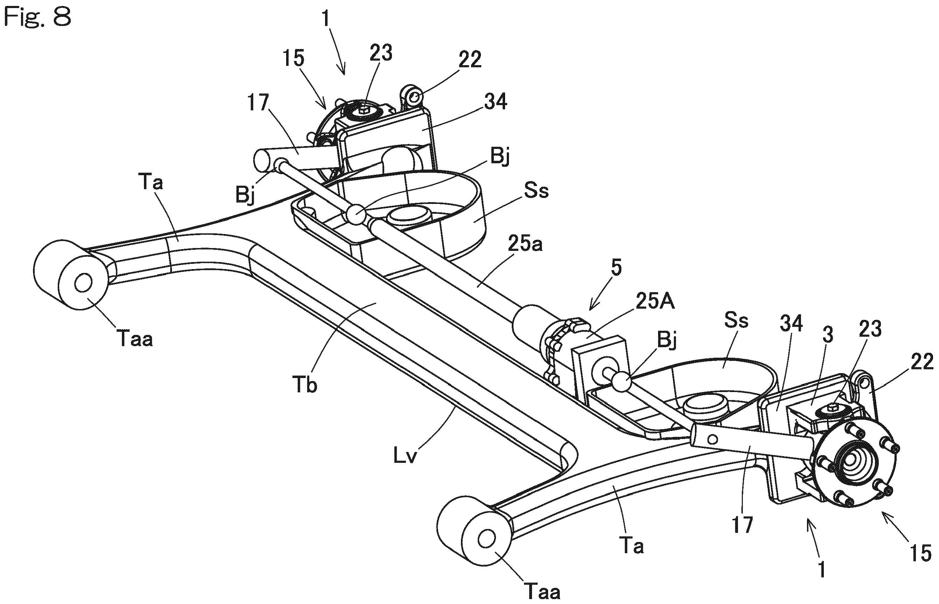

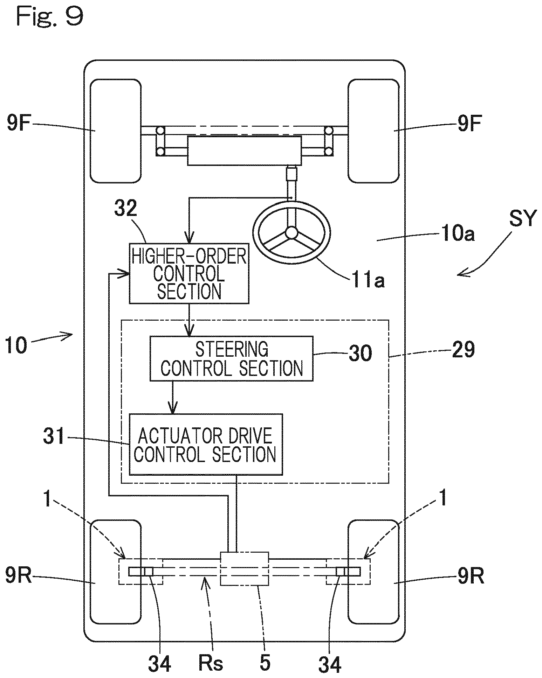

As shown in Fig. 8 and Fig. 9, a single steering actuator 5 may be used to steer the left and right rear wheels 9R, 9R. The steering actuator 5 is fixed to the torsion beam Tb such that the linear motion mechanism main body 25A extends in the left-right direction of the vehicle body 10a. The single steering actuator 5 is provided with left and right output rods 25a, 25a each extending toward an outboard side. In this case, it is possible to reduce the weight and to suppress the moment of inertia in comparison with the configuration where two steering actuators are used to steer the left and right rear wheels. In this case, however, the steering angles of the left and right rear wheels 9R, 9R are controlled in phase. Otherwise, the same effects and advantages as those of the first embodiment are obtained.

### Steering System

As shown in Fig. 7 and Fig. 9, a steering system SY includes a steering function-equipped hub unit 1 according to any of the above embodiments and a control device 29 configured to control a steering actuator 5 (Fig. 1, Fig. 4, Fig. 5, Fig. 8) of the steering function-equipped hub unit 1. The control device 29 includes a steering control section 30 and an actuator drive control section 31. A driver operates turning angles of the front wheels 9F through the steering wheel. A higher-order control section 32 outputs a steering angle command signal to the left and right rear wheels 9R, 9R which is calculated according to an operation angle of a steering input part 11a (i.e., the steering wheel) in consideration of conditions of the vehicle 10. The steering control section 30 outputs a current command signal according to the steering angle command signal given from the higher-order control section 32.

The higher-order control section 32 is a control section that is superordinate to the steering control section 30. The higher-order control section 32 may include, for example, an electronic control unit (or vehicle control unit, abbreviated as VCU) for performing general control of a vehicle.

The actuator drive control section 31 outputs current according to a current command signal inputted from the steering control section 30 so as to drive and control the steering actuator 5. In either example of Fig. 7 and Fig. 9, one steering actuator 5 is provided with one actuator drive control section 31. The actuator drive control section 31 controls electric power to be supplied to a coil of the motor 26 (Fig. 1, Fig. 4, Fig. 5, Fig. 8). The actuator drive control section 31 constitutes, for example, a non-illustrated half-bridge circuit including a switch element and performs PWM control for determining a motor application voltage with an ON-OFF duty cycle of the switch element. In this way, an angle of the turning shaft-equipped hub bearing 15 (Fig. 1, Fig. 4, Fig. 5, Fig. 8) relative to the unit support member 3 can be changed so as to arbitrarily change a steering angle of the rear wheel 9R. The steering angle of the rear wheel 9R can be changed according to traveling conditions of the vehicle 10 so that it is possible to improve motion performance and fuel economy of the vehicle 10.

The steering system SY may operate the steering actuator 5 in response to a command from a non-illustrated automated drive device or a non-illustrated drive assistance device, instead of an operation of the steering wheel by a driver.

Although the present invention has been fully described in connection with the embodiments thereof, the embodiments disclosed herein are merely examples in all respects, and are not to be taken as limiting the scope of the present invention in any way whatsoever. The scope of the present invention is to be determined by the appended claims, not by the above description, and is intended to include any change made within the scope of claims or equivalent thereto.

### [Reference Numerals]

- 1: Steering function-equipped hub unit
- 3: Unit support member
- 5: Steering actuator
- 9R: Rear wheel
- 10: Vehicle
- 10a: Vehicle body
- 15: Turning shaft-equipped hub bearing
- 16b: Turning shaft
- 19: Outer ring
- 25A: Linear motion mechanism main body
- 25a: Output rod (linear motion output part)
- Ta: Trailing arm
- Tb: Torsion beam
- Rs: Torsion beam suspension device
- Taa: Rotation support part
- Tab: Communication hole
- Ss: Spring sheet

## Claims

1. A steering function-equipped hub unit for steering a rear wheel of a vehicle, which is configured to be supported by a suspension device including a torsion beam and a pair of trailing arms, the steering function-equipped hub unit comprising:
a turning shaft-equipped hub bearing including a turning shaft extending in a vertical direction and configured to rotatably support the rear wheel;
a unit support member supporting the turning shaft-equipped hub bearing such that the turning shaft-equipped hub bearing is rotatable about a turning axis of the turning shaft; and
a steering actuator separate from the unit support member and configured to rotationally drive the turning shaft-equipped hub bearing about the turning axis, wherein
the steering actuator is attached to the suspension device at a position higher than a lowermost surface of the torsion beam of the suspension device and between a rotation support part of the suspension device and the turning shaft-equipped hub bearing.

2. The steering function-equipped hub unit as claimed in claim 1, wherein the steering actuator includes a linear motion mechanism main body and a linear motion output part capable of advancing and retreating with respect to the linear motion mechanism main body and configured to provide a steering force to an outer ring of the turning shaft-equipped hub bearing, and
the linear motion mechanism main body is attached to the suspension device such that the linear motion output part advances and retreats in a left-right direction of the vehicle body.

3. The steering function-equipped hub unit as claimed in claim 2, wherein each of the trailing arms further includes a communication hole communicating a vehicle inner side with a vehicle outer side, and a part of the linear motion output part is located within the communication hole.

4. The steering function-equipped hub unit as claimed in claim 3, wherein the steering actuator is disposed at a location where the steering actuator overlaps with the trailing arms in a side view.

5. The steering function-equipped hub unit as claimed in any one of claims 1 to 4, wherein the suspension device further includes a spring sheet, and the steering actuator is fixed to the spring sheet.

6. The steering function-equipped hub unit as claimed in any one of claims 1 to 5, wherein the suspension device has left and right side parts, each of the side parts being attached with the unit support member, and the single steering actuator is configured to steer left and right rear wheels.
